# DEMANDE DE BREVET EUROPEEN

(11) **EP 1 314 541 A1**
(43) Date de publication de la demande: **28.05.2003**
(21) Numéro de dépôt: 02362018.0
(22) Date de dépôt: 19.11.2002
(51) Int. Cl.: B29C 70/22

(54) **Dispositif de tramage pour la réalisation d'armatures textiles épaisses et armatures ainsi obtenues**

(30) Priorité: 27.11.2001 FR 0115315
(71) Demandeur: EADS LAUNCH VEHICLES, 75116 Paris (FR)
(72) Inventeur: Cahuzac, Georges, 33110 Le Bouscat (FR); Darrieux, Jean-Louis, 33112 Saint Laurent Medoc (FR)
(74) Mandataire: Thébault, Jean-Louis

(57) **Abrégé**

- L'objet de l'invention est un dispositif de tramage pour la réalisation d'armatures textiles épaisses constituées de nappes superposées de fils solidarisées entre elles par un fil de liage traversant lesdites nappes, ledit dispositif comprenant un cadre (13) muni latéralement et à sa périphérie de picots d'accrochage (17) régulièrement distribués, des moyens (21) de dépose à l'aide desdits picots du fil (22) et des moyens de tassage des nappes, caractérisé en ce que lesdits picots (17) sont constitués de tiges comprenant un premier tronçon (17a) à légère inclinaison vers l'extérieur du cadre et un second tronçon rectiligne (17b) prolongeant le premier et présentant une inclinaison vers l'extérieur du cadre sensiblement plus accentuée, en ce que lesdits moyens de dépose du fil sont constitués par une pluralité de passettes (21) entraînant chacune un fil (22), et mues simultanément en étant espacées d'un intervalle égal à n fois l'intervalle entre picots, et en ce que lesdits moyens de tassage des nappes sont constitués de moyens (23 à 25) aptes à presser l'ensemble (18) desdites nappes sur leur pourtour.
- Application à la réalisation de pièces composites.

## Description

La présente invention a trait aux armatures textiles épaisses notamment destinées à la réalisation de pièces composites constituées d'une telle armature noyée dans une matrice durcie.

Une armature de ce genre comprend des nappes superposées de fils, de carbone, de verre, de bore notamment, généralement liées transversalement par des coutures transversales ou des fils traversants.

Ces armatures sont réalisées en deux étapes. Lors de la première étape, dite de tramage, on réalise une superposition de nappes orientées, chaque nappe étant formée en déposant des fils constitués de plusieurs milliers de filaments à l'aide de passettes faisant des allers et retours sur un cadre muni de dispositifs d'accrochage dénommés picots disposés sur sa périphérie.

Dans la seconde étape, dite de liage, des fils transversaux sont mis en place par pénétration de l'empilage de nappes par une ou plusieurs aiguilles.

Dans le brevet FR-A-2 718 757 de la Demanderesse, on décrit un procédé et une machine pour la réalisation d'une armature du type ci-dessus.

Dans ce brevet, il est décrit un dispositif de tramage constitué d'un cadre entourant une masse de matière souple et muni de picots d'accrochage implantés sur le pourtour et d'un côté du cadre.

Ces picots sont de simples tiges rectilignes disposées parallèlement au plan du cadre et à égale distance les unes des autres. Le tramage consiste, pour chaque nappe, à déposer des tronçons de fils parallèlement à une direction en tendant un fil entre deux picots de bords opposés du cadre.

Les tronçons de fils étant déposés un à un et successivement, on comprend qu'il faut un temps non négligeable pour constituer l'empilage désiré, lequel peut comporter une dizaine de nappes superposées. Par ailleurs, il est très délicat d'obtenir une superposition régulière des nappes, notamment à hauteur des picots du fait que leur contournement par le fil qui change de direction ne se fait pas de manière superposée et avec le même espacement. Il s'ensuit des problèmes d'inhomogénéité dans la masse de l'armature qui ne présente pas une épaisseur précise et constante en particulier sur sa périphérie.

Ces problèmes ne sont pas complètement réglés par le tassement qui est opéré après mise en place des nappes successives.

En effet, ce tassement s'effectue par une plaque pressée sur l'empilage de nappes, d'un seul côté de celui-ci puisque l'autre côté est masqué par ladite masse de matière souple remplissant l'intérieur du cadre de tramage.

Il n'est pas possible de maintenir un tel tassement pendant l'opération ultérieure de liage puisqu'il faut dégager l'empilage des nappes pour permettre aux aiguilles de liage de pénétrer dans le matelas fibreux ainsi constitué en sorte de lier d'un fil et sans nouage lesdites nappes, le matériau souple disposé sur le matelas fibreux servant à retenir les fils transversaux de liage.

La présence du matériau souple sur l'une des faces du matelas au cours du piquage assure ainsi une certaine tension aux fils transversaux contribuant avec le tassement préalable à l'obtention d'armatures présentant une meilleure compacité.

Toutefois, on n'obtient pas une compacité optimale du fait que le tassement susdit n'est pas maintenu pendant le piquage et que par réaction élastique les différentes nappes superposées ont tendance, une fois libérées du pressage, à s'écarter les unes des autres, cette tendance n'étant pas complètement contre-balancée par la tension exercée par les fils transversaux.

Par ailleurs, la technique exposée dans FR-A-2 718 757 ne s'applique pas au liage avec nouage, lequel implique un libre accès aux deux faces opposées du matelas fibreux.

Par FR-A-2 730 247 on connaît un procédé de réalisation d'un tissu à trois dimensions constitué de nappes fibreuses superposées liées entre elles transversalement par un liage avec nouage, plus particulièrement par un point de chaînette.

A cet effet, il est prévu dans un mode de mise en oeuvre un dispositif de tramage analogue à celui de FR-A-2 718 757, avec cette différence que l'intérieur du cadre est totalement dégagé, permettant ainsi l'accès aux deux faces opposées du matelas fibreux.

Ce dispositif de tramage présente bien entendu les mêmes inconvénients en ce qui concerne l'homogénéité et la compacité des armatures ainsi réalisées.

La présente invention vise la réalisation d'armatures épaisses, plus particulièrement du type à liage transversal par point de chaînette, et susceptible de présenter une compacité modulable pouvant être optimale.

A cet effet, l'invention a pour objet un dispositif de tramage pour la réalisation d'armatures textiles épaisses constituées de nappes superposées de fils solidarisées entre elles par un fil de liage traversant lesdites nappes, ledit dispositif comprenant un cadre muni latéralement et à sa périphérie de picots d'accrochage régulièrement distribués, des moyens de dépose à l'aide desdits picots du fil constituant lesdites nappes et des moyens de tassage des nappes, caractérisé en ce que lesdits picots sont constitués de tiges comprenant un premier tronçon rectiligne partant du cadre et présentant une légère inclinaison vers l'extérieur du cadre et un second tronçon rectiligne prolongeant le premier et présentant une inclinaison vers l'extérieur du cadre sensiblement plus accentuée que celle dudit premier tronçon, en ce que lesdits moyens de dépose du fil sont constitués par une pluralité de passettes entraînant chacune un fil, lesdites passettes étant mues simultanément et espacées d'un intervalle égal à **n** fois l'intervalle entre picots, **n** étant un nombre entier et en ce que lesdits moyens de tassage des nappes sont constitués de moyens aptes à presser l'ensemble desdites nappes sur leur pourtour, au voisinage du point d'inflexion entre les deux tronçons des picots d'accrochage.

Suivant un mode de réalisation, l'inclinaison des premiers tronçons des picots est de l'ordre de quelques degrés, cependant que celle des seconds tronçons est de l'ordre de 45°.

Un tel dispositif permet un tramage à une hauteur constante, celle correspondant à l'inflexion de l'axe des picots, le fil étant placé à hauteur du second tronçon en sorte que par une descente naturelle des fils le long desdits seconds tronçons la nappe en cours de constitution se stabilise d'elle-même à hauteur de ladite inflexion, cependant que les nappes formées antérieurement reculent d'elles-mêmes le long du premier tronçon, grâce à sa propre inclinaison, pour faire ainsi la place à la nappe nouvelle.

A ce tassage naturel dû à la forme des picots s'ajoute celui desdits moyens de tassage à la périphérie du matelas de nappes.

Suivant un mode de réalisation préféré, lesdits moyens de tassage sont constitués d'un cadre mobile disposé du côté desdites nappes opposé à celui tourné vers lesdits seconds tronçons de picots. Un tel cadre tasseur dûment pressé contre le matelas de nappes sur toute sa périphérie, pousse la lisière du matelas en direction du second tronçon des picots, lequel bloque du fait de son inclinaison le matelas et assure ainsi son pincement périphérique. On peut de la sorte non seulement moduler le tassement et donc la compacité du matelas mais maintenir ce tassement pendant l'opération ultérieure de liage, garantissant ainsi véritablement une compacité optimale à l'armature obtenue, puisque le maintien en pression dudit cadre tasseur laisse néanmoins pratiquement totalement dégagée la face adjacente du matelas.

La pression du cadre tasseur fait ainsi se déplacer l'empilage de nappes le long des premiers tronçons des picots, en direction desdits points d'inflexion, ce qui met en légère tension les fils de nappes.

D'autres caractéristiques et avantages ressortiront de la description qui va suivre d'un mode de réalisation du dispositif de l'invention, description donnée à titre d'exemple uniquement et en regard des dessins annexés sur lesquels :
- la figure 1 est une vue de face d'une machine de tramage et liage apte à la réalisation d'armatures épaisses selon l'invention ;
- la figure 2 est une vue en coupe suivant la ligne II-II de la machine de la figure 1 ;
- la figure 3 est une vue partielle en perspective d'un cadre de tramage selon l'invention ;
- la figure 4a est une vue en coupe d'un côté du cadre de la figure 3 en place sur la machine des figures 1 et 2 ;
- la figure 4b représente le dispositif de la figure 4a, au cours de l'opération de liage postérieure au tramage ;
- la figure 5 illustre une dépose des fils d'une nappe sur un cadre du type représenté en figure 3, à l'aide d'une tête de tramage à six passettes ;
- les figures 6a à 6d illustrent la trajectoire de contournement des picots d'accrochage par les six passettes de la tête de tramage ;
- les figures 7a et 7b illustrent un autre mode de contournement des picots par la tête de tramage ;
- la figure 8 illustre le passage de trois fils entre deux picots à l'aide de la tête de tramage de la figure 5 ;
- les figures 9a et 9b illustrent une variante de tramage à l'aide d'une tête de tramage à passettes à pas élargi ;
- la figure 10 illustre le tramage de gros fil à l'aide d'une tête de tramage à passettes à pas élargi ;
- la figure 11 représente schématiquement et en perspective une tête de tramage à six passettes ;
- la figure 12 représente un cadre de tramage à barre coulissante, et
- la figure 13 représente un cadre de tramage à barrettes multiples pour la réalisation d'une armature à épaisseur variable.

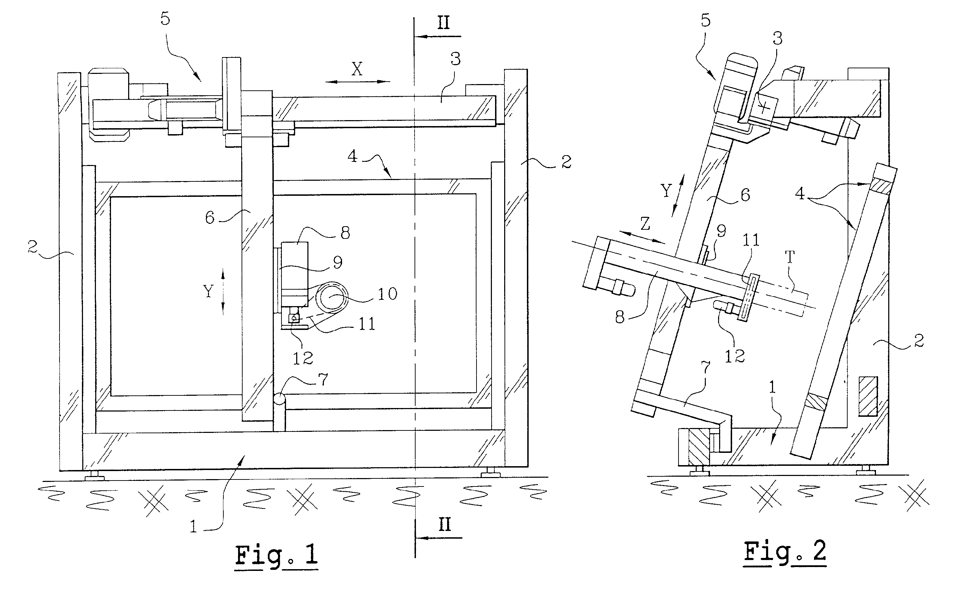

Les figures 1 et 2 représentent un type de machine de tramage-liage pour la réalisation d'armatures épaisses à nappes superposées liées transversalement, de conception connue permettant de travailler dans un plan de travail incliné pour améliorer l'ergonomie et diminuer la surface d'atelier occupée.

La machine comprend un bâti pourvu d'un piétement 1 et de montants verticaux 2, réunis à leurs extrémités supérieures par une traverse horizontale 3, et sur lesquels peut être fixé en 4 un cadre rectangulaire. La traverse 3 matérialise un premier axe X, sur lequel peut coulisser un chariot 5 portant une barre 6. Cette dernière est perpendiculaire à la traverse 3 et inclinée de façon à s'étendre parallèlement au plan du cadre 4. Cette barre 6 est solidaire, à son extrémité opposée à la traverse 3, du piétement 1 par l'intermédiaire d'une barre de liaison coudée 7, et matérialise un deuxième axe Y, orthogonal à X. Par ailleurs, la barre 6 porte, à son tour, un bras 8 pouvant coulisser le long de celle-ci grâce à un chariot 9 et matérialisant un troisième axe Z perpendiculaire au plan du cadre 4. A son extrémité proche du cadre 4, le bras 8 porte, décalé latéralement, un axe rotatif 10 servant de porte-outil pour un outil T (représenté schématiquement en traits mixtes sur la figure 2) qui peut être une tête de tramage ou une tête de piquage. En l'occurrence l'outil T est une tête de tramage.

La tête T est solidaire de l'axe rotatif 10 lui-même entraîné en rotation par l'intermédiaire d'une courroie symbolisée en 11 et mue par un moteur 12.

Le cadre 4 sert lui-même de support pour un cadre de tramage, généralement rectangulaire et qui peut être de dimensions variables selon le type de pièce en matériau composite incorporant l'armature épaisse, à réaliser.

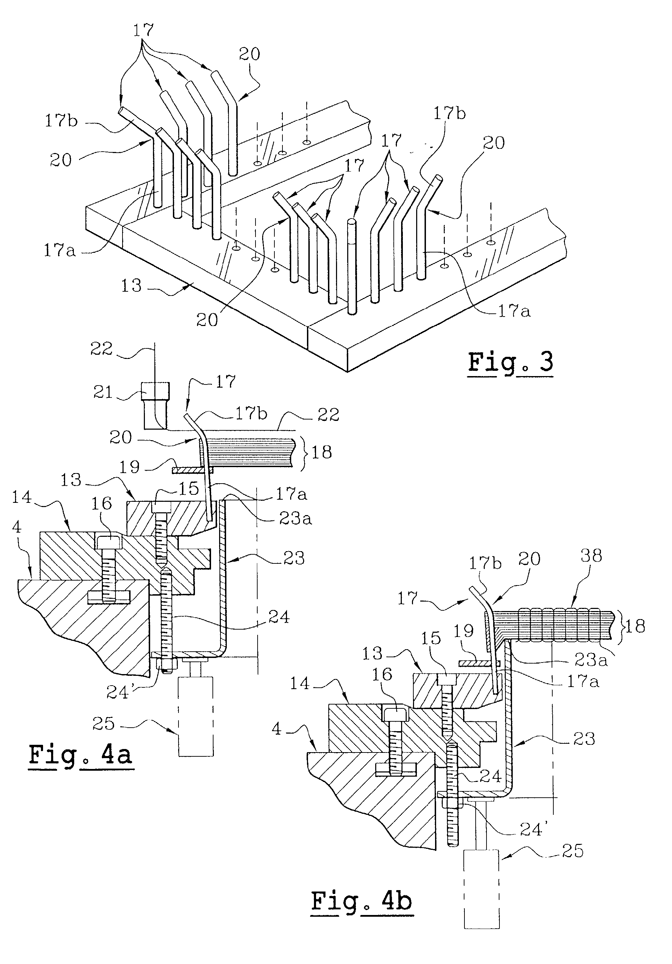

Sur les figures 3 et 4a, 4b, on a représenté en 13 un cadre de tramage rectangulaire conforme à l'invention, monté de manière amovible sur le cadre général 4 par l'intermédiaire d'une platine de montage 14 (figures 4a, 4b).

Le cadre 13 est formé de quatre côtés démontables et est fixé par plusieurs vis 15 engagées dans la platine rectangulaire 14, elle-même fixée de manière amovible à l'aide de boulons 16.

Latéralement, sur l'une des faces du cadre 13 et au voisinage du bord interne, sont fichés dans le cadre une série de picots d'accrochage 17, régulièrement distribués sur tout le pourtour intérieur du cadre.

Conformément à l'invention, les picots 17 sont des tiges cylindriques comprenant chacune un premier tronçon rectiligne 17a s'étendant depuis le cadre et légèrement incliné, de quelques degrés, en direction de l'extérieur du cadre, prolongé par un second tronçon rectiligne 17b, également incliné vers l'extérieur mais d'une plus forte amplitude que le premier tronçon 17a. A titre d'exemple et préférentiellement, l'inclinaison des seconds tronçons 17b est de l'ordre de 45° par rapport au plan du cadre 13.

Sur la figure 4a, on a représenté en 18 un empilage ou matelas de nappes superposées de fils tramés sur les picots 17.

Le long des premiers tronçons 17a, on peut faire coulisser le long des quatre côtés du cadre 13, une grille 19 percée de trous dite d'indexage destinée à améliorer le parallélisme et la tenue des picots 17 au démarrage d'un tramage.

En 21, sur la figure 4a est représentée schématiquement une passette guidant un fil 22 à tramer.

En 23, sur les figures 4a, 4b, est représenté un cadre tasseur rectangulaire monté librement coulissant le long de tiges filetées de guidage 24 fixées sur la platine 14. Un écrou 24' vissé sur les tiges 24 permet de bloquer le cadre 23 dans la position désirée.

Le cadre tasseur 23 présente une aile orthogonale au plan du cadre 13 et dont la tranche supérieure 23a est susceptible, sous l'action de vérins de commande 25, de venir s'appliquer contre la face en regard du matelas 18, au droit de toute sa périphérie et à faible distance des picots 17. Les positions respectivement hors service et de tassage du cadre 23 sont illustrées par les figures 4a et 4b.

Suivant une autre caractéristique du dispositif de tramage selon l'invention, la tête de tramage T comporte avantageusement plusieurs passettes 21, mues simultanément et ayant en charge chacune un fil à tramer.

Par fil, on entend un ensemble de plusieurs milliers de filaments assemblés, généralement secs, mais pouvant être éventuellement pré-imprégnés d'une résine appropriée. Le matériau de ces fils est choisi dans le groupe des matériaux habituellement utilisés pour la réalisation de préformes textiles, tels que le carbone, le verre sous forme de rovings, le bore, le Kevlar, la silice, le carbone de silicium, les fibres aramides, etc...

Par nappe, on entend l'ensemble des fils déposés côte à côte selon une seule couche dans une même direction.

Généralement, le tramage s'effectue selon quatre directions, à savoir un tramage à 0° consistant à déposer une nappe de fils parallèles par exemple aux grands côtés du cadre de tramage, un tramage à 90° de fils parallèles aux petits côtés du cadre et deux tramages respectivement à + 45° ou - 45°, ces deux tramages étant orthogonaux entre eux.

La plupart du temps, une armature textile épaisse pour la réalisation de pièces composites comprend des nappes de fils à quatre directions : 0°, 90°, + 45° et - 45°. En variante et selon les applications, une orientation différente de 45° par rapport aux nappes à 0° et 90° pourra être utilisée.

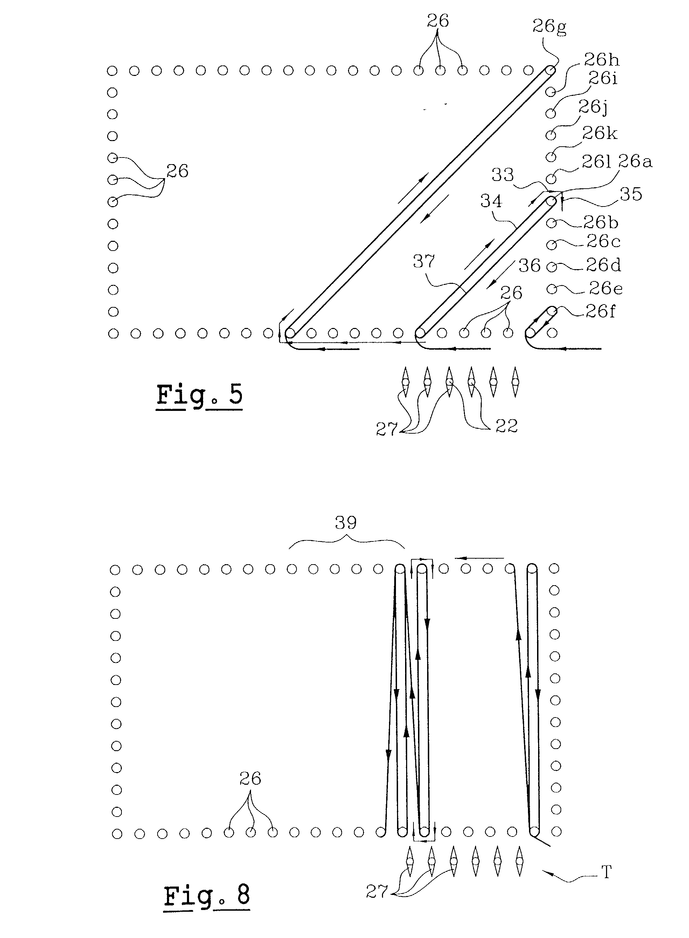

Sur la figure 5, on a représenté un début de tramage d'une nappe à + 45° sur un cadre rectangulaire du type de la figure 3 et dont on a simplement représenté par des cercles 26 les emplacements des picots 17.

Le fil de tramage est par exemple un fil de carbone à 3 000 filaments.

Dans l'exemple illustré par la figure 5, la tête de tramage T est une tête multiple comprenant six passettes identiques 27, alignées, seules ces dernières étant représentées symboliquement en vue en coupe transversale, avec leur fil à tramer 22 à l'intérieur.

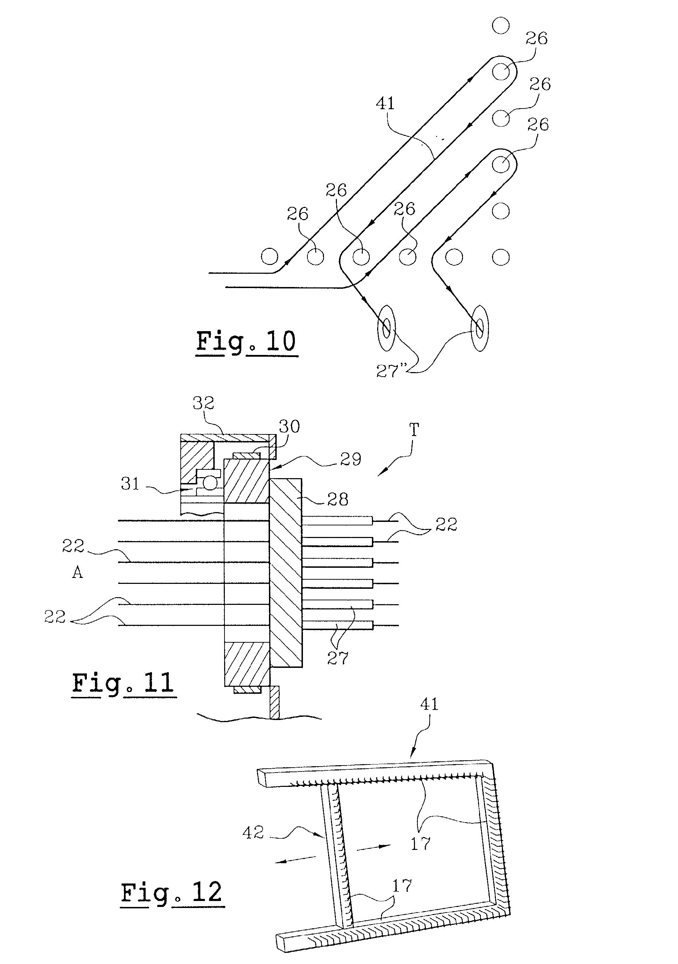

Un exemple de réalisation d'une tête de tramage T à six passettes 27 est illustré schématiquement par la figure 11.

Les passettes 27 sont de forme conventionnelle, c'est-à-dire tubulaires, creuses et de section approximativement losangée dont le grand axe est orthogonal au plan défini par l'alignement des six passettes.

Les passettes 27 sont fixées en parallèle avec un écartement entre elles constant, sur une barrette support 28, elle-même fixée sur une pièce annulaire 29 entraînée en rotation autour de son axe par une courroie 30 correspondant à la courroie 11 du dispositif des figures 1 et 2.

L'ensemble rotatif 28-29 est monté par l'intermédiaire d'un roulement à billes 32 sur un carter fixe 32 lui-même solidaire de l'extrémité du bras 8.

A l'amont A de la tête T, les fils à tramer 22 sont acheminés en parallèle à partir de bobines disposées sur un cantre (non représenté), via un dispositif de dévidage et alimentation sous tension régulée avec rattrapage de longueur de fil, à la manière habituelle.

La figure 5 illustre la formation d'une nappe à + 45° par passes d'aller-retour, au cours de chacune desquelles simultanément six fils 22 seront déposés entre six picots 26 du bord longitudinal inférieur du cadre et six picots 26 du bord latéral droit, suivant une trajectoire des passettes indiquée par les flèches.

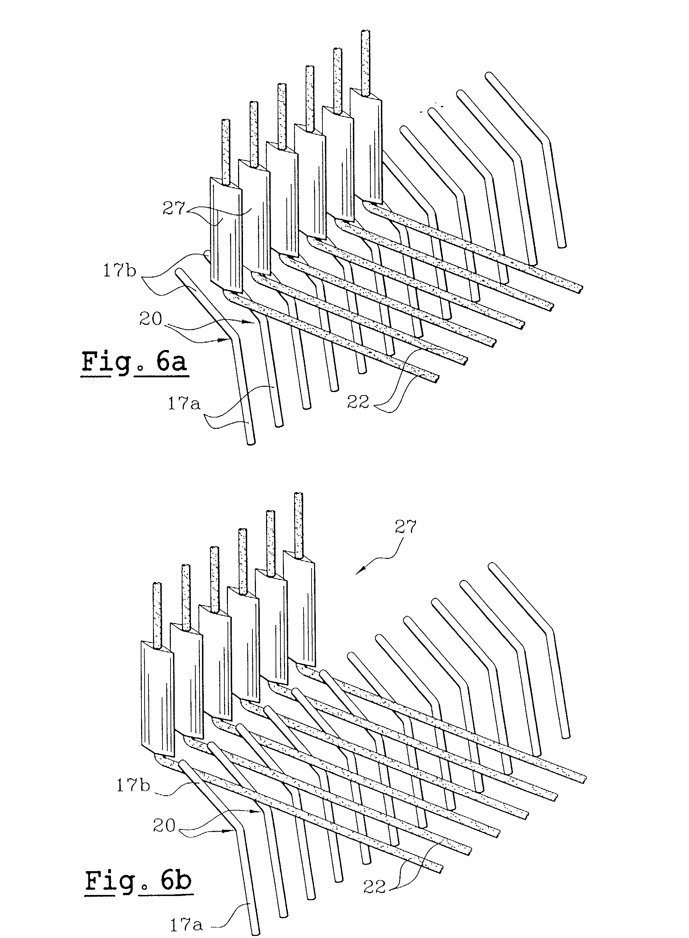

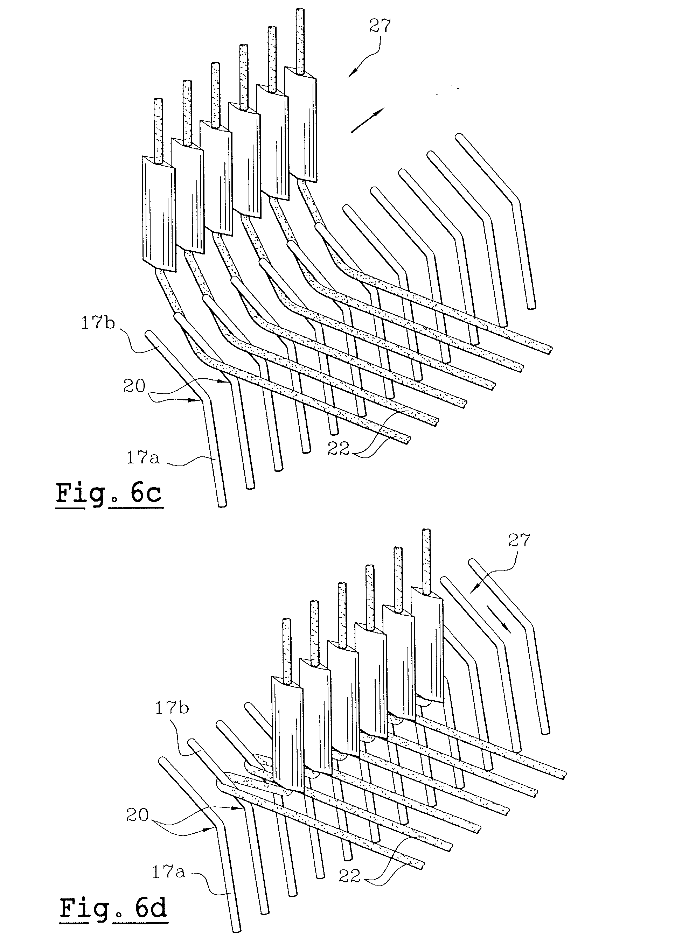

La mise en place des fils est illustrée plus en détail par les figures 6a à 6d.

Après enfilage des fils dans les passettes 27, puis collage dans l'angle de début de tramage, les passettes sont, au départ de la première passe, dans la position indiquée sur la figure 5, chaque passette étant en regard d'un intervalle entre deux picots 26. Les passettes 27 sont déplacées en direction de l'intérieur du cadre. Une fois franchie la ligne des picots 26, les passettes 27 sont déplacées en translation oblique en direction du petit côté droit du cadre de tramage. En fin de course, la tête T est pivotée de 90° afin de placer les passettes 27 en regard des intervalles entre picots 26a à 26f dudit côté droit.

Les passettes 27 franchissent l'alignement des picots 26a à 26f suivant une trajectoire orthogonale à leur alignement comme indiqué par la flèche 33. Les passettes 27 vont alors contourner les picots 26a à 26f en sorte de placer le tronçon aller des fils tels que représenté par le tronçon 34 de la figure 5.

Les figures 6a à 6d illustrent le contournement des picots, conformément à l'invention, ces contournements s'effectuant de telle manière que les fils 22 (voir aussi figure 4a) viennent en contact avec le second tronçon 17b des picots.

Les figures 6a et 6d représentent le déplacement des passettes 27 suivant les flèches 35 et 36 respectivement de la figure 5, l'orientation de la barrette 28 support des passettes n'étant pas modifiée.

Sur la figure 6d, les passettes 27 entament la mise en place des fils retours, tel que le fil 37 de la figure 5, cette mise en place s'achevant par un déplacement de la tête de tramage en regard des six picots de départ, analogue à ce qui s'est passé en regard des picots 26a à 26f.

La tension exercée sur les fils 22 au cours du tramage et leur dépose au contact des tronçons inclinés 17b des picots font que naturellement les fils glissent jusqu'au point d'inflexion 20 des picots.

La figure 5 illustre une deuxième passe aller-retour de la tête de tramage. A cet effet, les passettes 27 qui se retrouvent dans la position illustrée par la figure 5 sont déplacées en translation parallèlement à l'alignement inférieur des picots 26, d'une distance correspondant à six intervalles entre picots. Les passettes 27 sont alors en position de départ d'un aller-retour analogue au premier qui vient d'être décrit et affectant les picots 26g à 261 du petit côté droit du cadre.

Ainsi, de proche en proche et par un certain nombre de passes aller-retour, tout le cadre sera recouvert et la nappe + 45° sera totalement formée.

Le processus de formation des nappes + 45°, 0° et 90° est analogue. Pour les nappes à 0° et à 90°, la tête de tramage T n'a pas à être pivotée mais simplement déplacée en translation dans les deux directions parallèles aux côtés du cadre.

On procède de la sorte à la mise en place du nombre et du type de nappes appropriées, les fils des différentes nappes étant identiques ou non. C'est ainsi que l'on pourra superposer successivement une nappe à 0°, une nappe à + 45°, une nappe à - 45 ° et une nappe à 90°, ce motif étant ensuite répété un certain nombre de fois pour obtenir l'épaisseur du matelas 18 désirée.

Toutes les nappes se forment à hauteur des points d'inflexion 20 des picots 17.

Chaque nouvelle nappe pousse la nappe précédente sous-jacente, ce tassement naturel étant provoqué par la légère inclinaison des premiers tronçons 17a des picots, comme illustré par les figures 4a et 4b. Au cours de ce tassage, la grille d'indexage 19 coulisse vers le bas en étant poussée par les fils.

Le déplacement de la tête de tramage est commandé automatiquement par programmation.

Une fois le matelas 18 réalisé, un compactage de celui-ci, à sa périphérie, du côté opposé aux seconds tronçons 17b des picots est réalisé en déplaçant, grâce aux vérins 25, le cadre-tasseur 23 dont la tranche supérieure 23a vient comprimer le matelas 18 comme illustré par la figure 4b.

Ce compactage est maintenu au cours de l'opération ultérieure de liage transversalement des nappes du matelas 18, par exemple par un point de chaînette comme illustré en 38 sur la figure 4b. La position très périphérique du cadre tasseur 23 par rapport au matelas 18 permet le libre accès pour un tel liage sur les deux faces opposées dudit matelas.

Le dispositif de tramage selon l'invention permet donc une distribution très régulière et homogène des nappes superposées et une compacité optimale de la structure tissée épaisse finale.

Il est à noter également qu'au moment du liage tous les fils des nappes sont tendus grâce au pressage opéré par le cadre 23.

La figure 6a à 6d et 5 illustrent la réalisation d'une nappe standard avec deux fils dans chaque intervalle entre deux picots consécutifs pour toutes les nappes à 0°, 90° et + 45°.

En variante, on peut pour les nappes, notamment à + 45°, déposer un seul fil entre deux picots consécutifs.

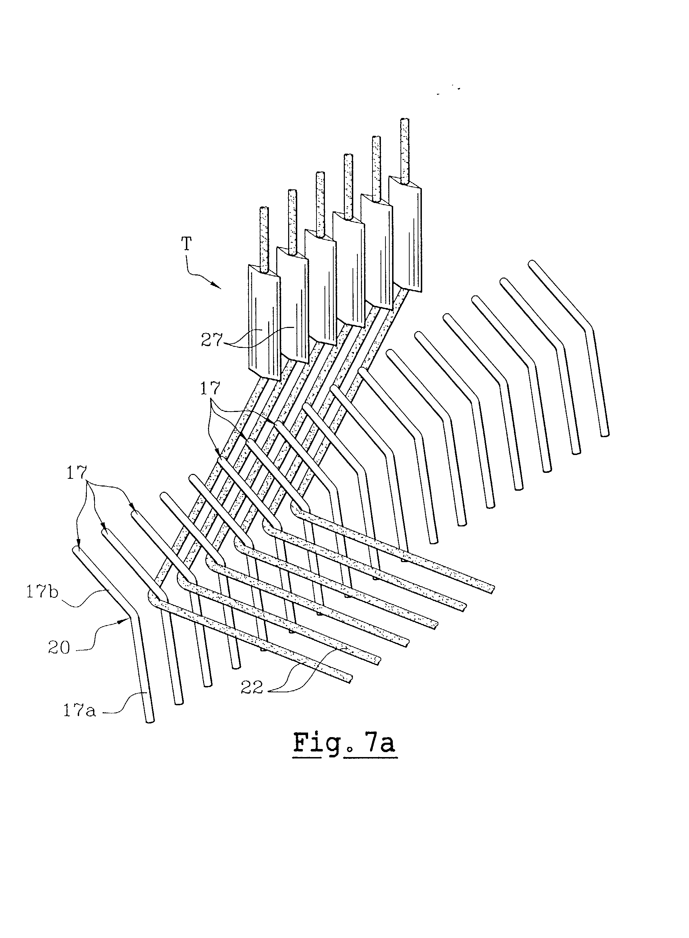

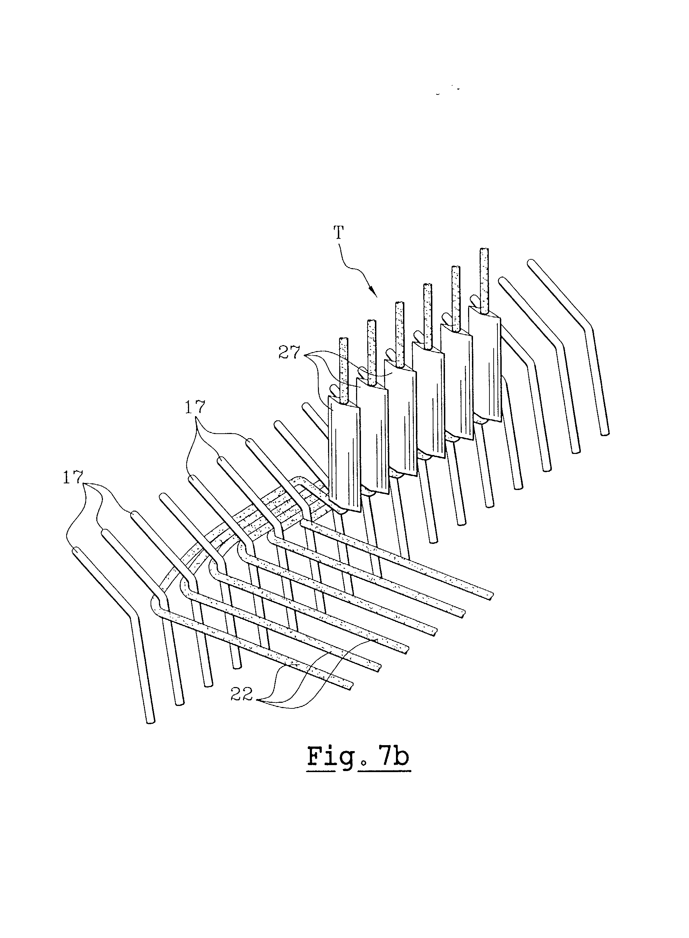

Les figures 7a et 7b illustrent une telle variante de tramage à l'aide de la même tête T à six passettes 27, selon laquelle chaque fil 22 ne contourne pas un picot pour se placer contre le fil déposé à l'aller, mais est décalé de six picots 17 (figure 7b) en sorte qu'au retour des passettes 27, chaque fil 22 prenne appui contre les six picots adjacents. Ainsi, il n'est déposé qu'un fil entre deux picots adjacents.

Cette dépose est faite sur les figures 7a, 7b à l'aide de passettes 27 à pas égal à celui des picots 17. Une même dépose peut être réalisée en particulier avec du gros fil avec des passettes à pas double de celui des picots comme illustré par la figure 10 décrite plus loin.

Une dépose de fil unique entre picots permet d'obtenir des nappes à + 45° plus fine que les nappes à 0 et 90°.

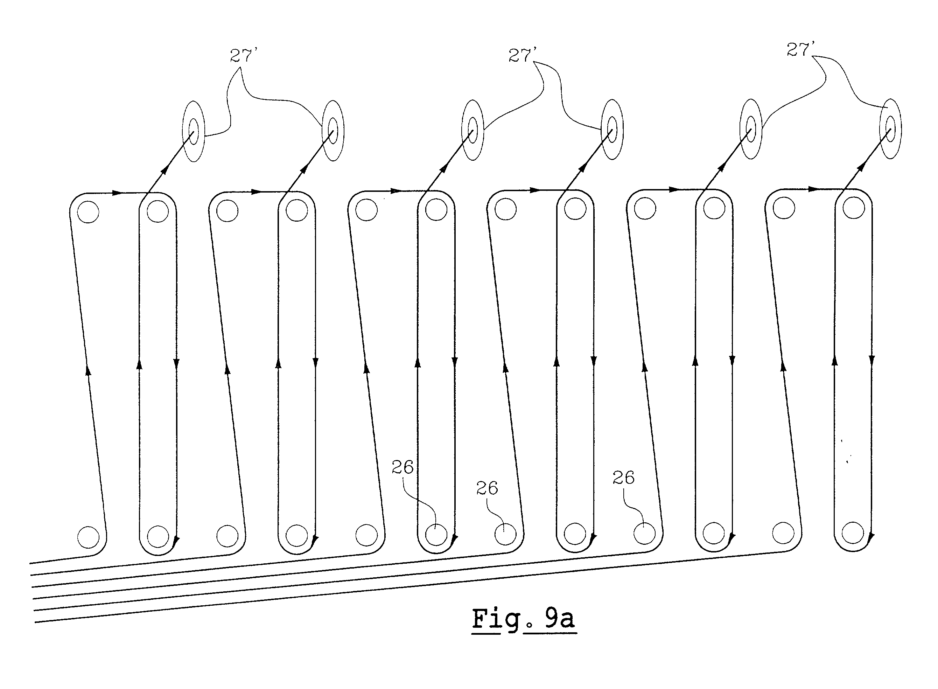

La figure 8 illustre la réalisation avec la même tête de tramage T à six passettes 27 d'une nappe à 90° avec trois fils entre deux picots 26 successifs.

A cet effet, la tête T fait un aller-retour à 90°, puis, revenue au point de départ, est décalée d'un pas (intervalle entre deux picots consécutifs) vers la gauche. Elle effectue alors un aller à 90°, puis est décalée vers la gauche de six pas pour attaquer au retour six nouveaux picots repérés 39 sur la figure 8, et ainsi de suite.

Cette dépose convient pour les petits fils. On peut ainsi réaliser une même préforme avec des nappes à 0° et 90° à 3 fils entre deux picots (figure 8) et des nappes à + 45° à deux fils entre deux picots (figure 5).

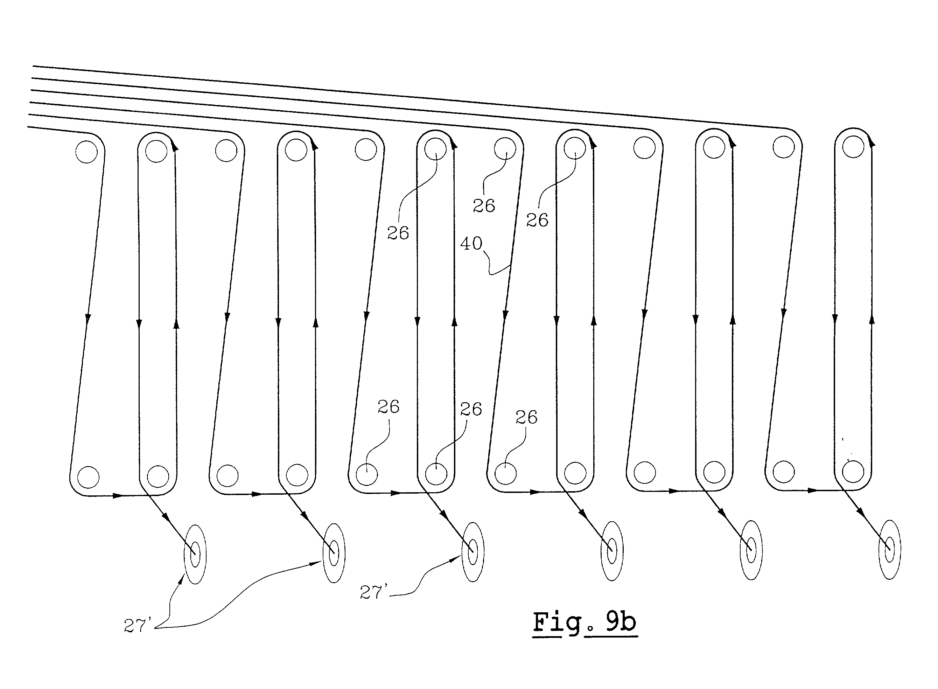

Les figures 9a, 9b illustrent une autre variante de tramage avec une tête de tramage selon l'invention, à six passettes 27' dont l'espacement ou pas est double de celui des picots 26.

La figure 9a illustre la mise en place de six fils au droit d'une première série de vingt-quatre picots 26, avec en alternance un fil entre deux picots, puis deux fils dans l'intervalle suivant, cependant que la figure 9b illustre l'étape suivante de mise en place de six fils au droit de la série suivante de vingt-quatre picots.

Pour la mise en place des tronçons de fil tels que 40, les passettes 27' seront déportées latéralement d'un pas de picot dans leur trajectoire entre picots 26 de bords opposés.

Cette variante est bien adaptée à la dépose de gros fils.

La figure 10 illustre l'utilisation de passettes 27" de pas double de celui des picots 26 pour la mise en place de gros fil, par exemple de 12 000 filaments, dont un seul 41 est prévu entre deux picots consécutifs, pour constituer une nappe à + 45°.

Le gros fil de type ci-dessus peut aussi être mis en place par des passettes de pas égal à celui des picots, ce dernier étant supérieur, par exemple le double de celui de picots destinés à la dépose de petit fil. On peut alors réaliser des nappes à 0 et 90° avec deux fils entre deux picots consécutifs et des nappes à + 45° avec un seul fil entre deux picots consécutifs.

Avec ces mêmes passettes et picots, on peut également réaliser des nappes à 0° et 90° à trois fils entre deux picots consécutifs (figure 8) et des nappes à + 45° à un seul fil entre deux picots consécutifs.

Par ailleurs, il est bien entendu possible de réaliser des armatures textiles comprenant des nappes à 0°, 90° et + 45°, d'épaisseurs sensiblement égales.

La figure 12 représente en perspective un cadre selon l'invention à "géométrie variable", à savoir un cadre 41 dont un petit côté 42 est monté coulissant sur les deux grands côtés, ce qui permet de changer la dimension des matelas 18 et de les adapter à celle des panneaux composites intégrant ces matelas comme armature.

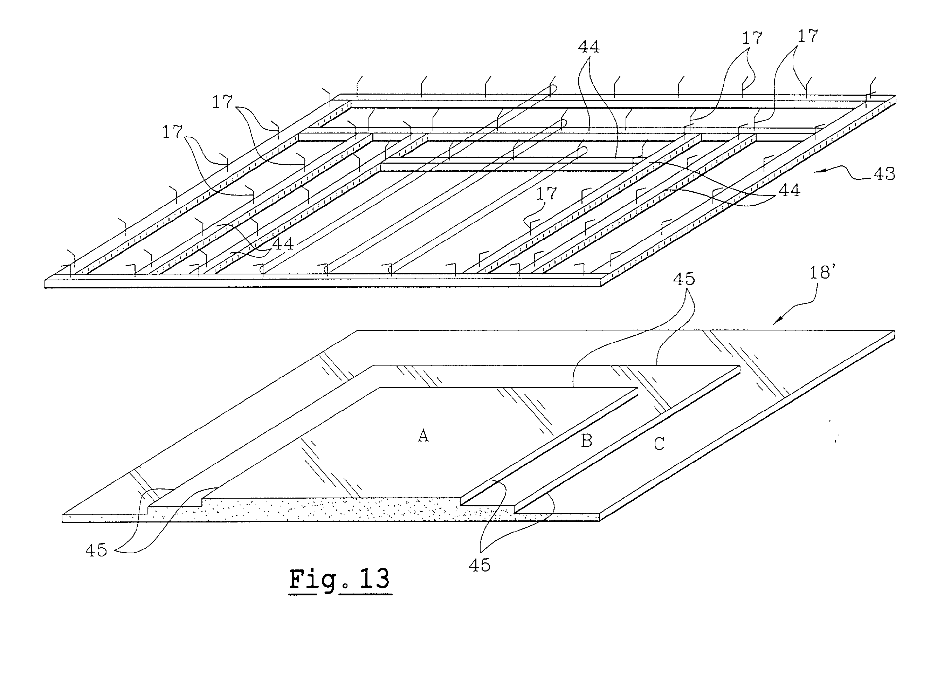

La figure 13 représente en perspective un cadre de tramage 43 à barrettes multiples 44, fixes, parallèles aux côtés extérieurs du cadre. Tous les éléments du cadre 43 sont munis de picots 17 dont seulement quelques uns sont représentés sur la figure.

Un tel cadre 43 permet la réalisation d'un matelas 18' dont une illustration symbolique est donnée sur la figure 13 en dessous du cadre. Le matelas 18' présente des zones A, B, C de différentes épaisseurs délimitées par des marches 45 correspondant auxdites barrettes 44.

Les préformes textiles obtenues avec les moyens de tramage selon l'invention sont destinées à la fabrication de pièces en matériaux composites classiques dont la matrice est une résine quelconque, polyester, époxyde, polyuréthane par exemple, ou en matériaux composites haute température dont la matrice est une céramique ou du carbone.

Une fois la préforme textile tramée et liée, quel que soit le mode de liage, il n'y a plus qu'à la découper et la placer dans un moule.

Le retrait de la préforme du cadre de tramage s'effectue à la manière habituelle par démontage des côtés du cadre 13 et extraction de l'ensemble des picots 17 de chaque côté par rotation et retrait des côtés en sorte de libérer la préforme.

Une telle préforme peut avoir une épaisseur réduite à celle de deux ou quatre nappes superposées ou au contraire une forte épaisseur correspondant à plusieurs dizaines de nappes, dont les qualités d'homogénéité et de compacité sont remarquables.

La tête de tramage T à passettes multiples permet une fabrication de telles préformes textiles beaucoup plus rapide puisqu'une pluralité de fils sont mis en place simultanément et en parallèle sur le cadre de tramage. Le nombre de passettes de la tête peut bien entendu varier selon les applications.

## Revendications

1. Dispositif de tramage pour la réalisation d'armatures textiles épaisses constituées de nappes superposées de fils solidarisées entre elles par un fil de liage traversant lesdites nappes, ledit dispositif comprenant un cadre (13) muni latéralement et à sa périphérie de picots d'accrochage (17) régulièrement distribués, des moyens (21) de dépose à l'aide desdits picots du fil (22) constituant lesdites nappes et des moyens de tassage des nappes, **caractérisé en ce que** lesdits picots (17) sont constitués de tiges comprenant un premier tronçon rectiligne (17a) partant du cadre (13) et présentant une légère inclinaison vers l'extérieur du cadre et un second tronçon rectiligne (17b) prolongeant le premier et présentant une inclinaison vers l'extérieur du cadre sensiblement plus accentuée que celle dudit premier tronçon, **en ce que** lesdits moyens de dépose du fil sont constitués par une pluralité de passettes (27) entraînant chacune un fil (22), lesdites passettes étant mues simultanément et espacées d'un intervalle égal à **n** fois l'intervalle entre picots, **n** étant un nombre entier et **en ce que** lesdits moyens de tassage des nappes sont constitués de moyens (23 à 25) aptes à presser l'ensemble desdites nappes sur leur pourtour, au voisinage du point d'inflexion (2a) entre les deux tronçons (17a, 17b) des picots d'accrochage.

2. Dispositif suivant la revendication 1, **caractérisé en ce que** l'inclinaison des premiers tronçons (17a) des picots (17) est de l'ordre de quelques degrés, cependant que celle des seconds tronçons (17b) est de l'ordre de 45°.

3. Dispositif suivant la revendication 1 ou 2, **caractérisé en ce que** lesdits moyens de tassage sont constitués d'un cadre mobile (23) disposé du côté desdites nappes opposé à celui tourné vers lesdits seconds tronçons (17b) de picots.

4. Dispositif suivant l'une des revendications 1 à 3, **caractérisé en ce que** l'intervalle ou pas entre deux passettes (27) de tramage consécutives est égal au pas des picots (17).

5. Dispositif suivant l'une des revendications 1 à 3, **caractérisé en ce que** l'intervalle ou pas entre deux passettes (27) de tramage consécutives est égal au double du pas des picots (17).

6. Dispositif suivant l'une des revendications 1 à 5, **caractérisé en ce que** lesdits premiers tronçons (17a) des picots (17) sont munis d'une grille d'indexage (19) susceptible de coulisser le long desdits tronçons (17a).

7. Dispositif suivant l'une des revendications 1 à 6, **caractérisé en ce que** l'un (42) des côtés du cadre de tramage (41) est réglable en position par rapport aux autres côtés.

8. Dispositif suivant l'une des revendications 1 à 6, **caractérisé en ce que** le cadre de tramage (43) comporte intérieurement des barrettes fixes (44) munies de picots d'accrochage (17) en sorte de réaliser des armatures textiles (18') à zones (A, B, C) d'épaisseurs différentes.

9. Armatures textiles épaisses obtenues à l'aide des moyens de tramage conformes à l'une des revendications 1 à 8.

10. Armatures textiles épaisses selon la revendication 9, comprenant des nappes à 0° et 90° comportant un nombre de fils différent de celui des fils des nappes à + 45°.

11. Armatures textiles épaisses selon la revendication 9 comprenant des nappes à 0°, 90° et + 45°, d'épaisseurs sensiblement égales.
